# EUROPEAN PATENT SPECIFICATION

(11) **EP 2 798 870 B1**
(45) Date of publication and mention of the grant of the patent: **06.04.2016**
(21) Application number: 12823113.1
(22) Date of filing: 21.12.2012
(51) Int. Cl.: H04W 12/06

(54) **METHODS AND APPARATUSES FOR PAIRING OF A MOBILE TERMINAL WITH A FARM CONTROL AND MONITORING SYSTEM**
VERFAHREN UND VORRICHTUNGEN ZUR PAARUNG EINES MOBILEN ENDGERÄTES MIT EINEM LANDWIRTSCHAFTLICHEN STEUERUNGS- UND ÜBERWACHUNGSSYSTEM
MÉTHODES ET APPAREILS POUR L'APPARIEMENT D'UN TERMINAL MOBILE AVEC UN SYSTÈME DE GESTION ET DE SURVEILLANCE D'UNE FERME

(30) Priority: 29.12.2011 SE 1151285; 29.12.2011 US 201161581133 P
(43) Date of publication of application: 05.11.2014
(73) Proprietor: DeLaval Holding AB, 147 21 Tumba (SE)
(72) Inventor: SVAHN, Conny, S-135 68 Tyresö (SE)
(74) Representative: Lilliehorn, Tobias
(86) International application number: PCT/SE2012/051495
(87) International publication number: WO 2013/100851

(56) References cited:
- EP-A1- 2 364 043
- EA-B1- 007 961
- RU-A- 2009 116 232
- RU-C2- 2 279 796
- US-A1- 2001 052 083
- US-A1- 2005 210 267
- US-B1- 8 000 727
- 'Sistema upravleniya avtomobilem s pomoschiyu mobilnogo telefona' STALKER MOBILE LAN - MAGIC SYSTEMS, [Online] 2005, pages 1 - 11 Retrieved from the Internet: <URL:http://www.autopulse.ru/files/64.pdf>

## Description

### TECHNICAL FIELD

Embodiments of the present invention presented herein generally relate to farming. More specifically, embodiments of the present invention presented herein relate to methods for allowing the pairing of a mobile terminal, such as a smart phone or a mobile phone, with a farm control and monitoring system associated with a farm. The disclosure also describes corresponding systems, mobile terminals, servers, computer programs and computer program products.

### BACKGROUND

The keeping of animals in installations, e.g. in industrial establishments, has changed by the increased use of information technology. As a consequence, also the control and monitoring of animal related processes have developed.

Many parameters relating to equipment used in these installations can be controlled both accurately and rapidly. As a mere example, in today's automated milk production there exists arrangements and methods for automatically measuring various parameters which indicate the yield and quality of the milk produced. Also, additional parameters can be measured and used to trigger initiation of certain automatically performed actions that help to optimize or improve the milk production. In addition, the amount of information which can be gathered concerning individual animals and parameters etc. relating to their management has increased. This has resulted in arrangements that are increasingly complex, for example in terms of the amount of information that is processed and the number of parameters which can be controlled.

For those persons who work within these installations, e.g. farmers, and whose task is to operate these arrangements, there is a need for enabling the monitoring and control of operations using sophisticated equipment while at the same time providing arrangements which are easy to use.

In current farm control and monitoring systems, the users (e.g. the farmers), generally monitor and control the installations via a user interface of a farm device. For example, the farm device may comprise a monitor screen or display for displaying parameters relating to equipment used in the installation and/or information about individual animals. Depending on displayed parameters and/or other information about the individual animals, the user can make well-informed decisions and make appropriate changes of various settings for the animal installation, if needed or appropriate. The change of settings etc. can be input by the user via the user interface of the farm device. The user interface may e.g. comprise a touch screen or the like.

In many installations, the farm device associated with the farm control and monitoring system is a stationary device, i.e. a device that is not movable. Thus, any individual who moves around within the installation and who observes that parameters relating to e.g. a certain animal or certain equipment in the installation that needs to be checked will have to move to the stationary farm device. Once the user is at the farm device, the user can monitor the parameters of this animal and/or information about the equipment and undertake any corrective measures, if needed or appropriate.

Since the farm device is a stationary device, the user cannot generally monitor the parameter values on the fly, e.g. when walking around within, or inside, the installation. This reduces the speed at which the user can check the parameter values and/or other information, since the user who walks within the animal installation will need to walk the distance to the farm device each time he or she wants to check parameter values and other information. This may also mean a delay in any decision making relating to the management of the farm.

Therefore, more convenient methods and arrangements have developed. For example, it has been suggested to pair a computer, e.g. a laptop computer, with the farm control and monitoring system.

By pairing a computer with the farm control and monitoring system, the user can access information about the controlled and monitored farm from anywhere and at any time the user finds most convenient. This provides for improved flexibility for the user. In addition, it helps the user making proper decisions at the right times. Moreover, by pairing a computer with the farm control and monitoring system, the user may send information or commands from the computer to the server, e.g., in order to change settings relating to certain equipment or an individual animal. Thus, the user does not necessarily have to walk the distance to the farm device of the farm control and monitoring system each time he or she wants to change settings. Instead, the user can change the settings by means of the computer while on the fly, e.g. when walking around within, or inside, the installation. This also provides for increased flexibility for the user.

In order for the computer to be paired to a certain farm, the computer must first be given a password for transmission to a central server for enabling authentication. The current way to provide the central server with this password involves the user manually entering a relatively long code or password via the user interface, typically the keyboard, of the computer. Once the relatively long code or password has been provided to the server and the server has authenticated the code or password, the server may allow the pairing of the computer with the farm in question or, more specifically, a farm control and monitoring system associated with the farm in question. If the server allows the pairing, the server may begin providing the computer with any data relating to the farm in question. Moreover, once the computer has been paired to the farm control and monitoring system, a user may begin sending information or commands from the computer to the server so as to change settings relating to the farm in question.

US 8000727 B1 discloses optical image processing for accessing a building control system.

### SUMMARY

Sometimes, however, a code or password is not properly typed in. Since the process of pairing a farm control and monitoring system with a computer requires manual input by someone, this is sometimes considered a security risk. Furthermore, manual input by users may be error prone. In this regard, it should be appreciated that the pairing process is sometimes performed at a location within the installation where animals are kept. This environment is typically non-clean and the user may therefore wear clothes and gloves suitable for such environment. Manually entering relatively long codes or passwords, which typically requires the pressing of several buttons on a keyboard, is not easy in such environment, especially not when the user is wearing gloves. Moreover, the pairing process may require fairly skilled users, that is to say that the user may need to have a certain level of computer skills in order to know exactly what should be manually entered and how.

It is therefore a general object of the various embodiments of the present invention to provide for methods and corresponding systems and farm devices, by which one or more of the above-mentioned disadvantages can be mitigated, alleviated or eliminated.

The various embodiments of the invention as set forth in the appended claims address this general object.

According to a first aspect, there is provided a method for allowing the pairing of a mobile terminal with a farm control and monitoring system associated with a farm, the method being performed in the mobile terminal and comprising: reading an optically readable representation of data placed within or inside an installation allowing access only for authorized users, which installation is controlled and monitored by means of the farm control and monitoring system; forming image data based on the read representation of data; and transmitting the image data as well as a pairing request message to a server, the pairing request message requesting the server to allow pairing of the mobile terminal with a farm control and monitoring system associated with the image data.

The step of reading the optically readable representation of data may comprise reading the optically readable representation of data from a farm device associated with the farm.

In one embodiment, the method further comprises receiving an acknowledgement (ACK) message from the server, when it has been determined by the server that the server allows pairing of the mobile terminal with the farm control and monitoring system, after which ACK message data relating to the farm control and monitoring system is accessible to the mobile terminal. Additionally, the method may comprise receiving data relating to the farm control and monitoring system. Yet further, after the ACK message has been received by the mobile terminal, the method may additionally comprise transmitting, i.e. sending, information and/or commands to the server. The information and/or commands may be sent to the server for the purpose of changing one or more settings relating to the farm associated with the farm control and monitoring system. Such setting may, for example, relate to a certain equipment of the farm in question. Additionally, or alternatively, such setting may relate to a parameter relating to an individual animal.

In some embodiments, the optically readable representation of data comprises a barcode. The barcode may be a matrix barcode. Furthermore, the matrix barcode may be a Quick Response, QR, code.

According to a second aspect, there is provided a method for allowing the pairing of a mobile terminal with a farm control and monitoring system associated with a farm, the method being performed in a server and comprising: transmitting image data to a farm device associated with the farm control and monitoring system to allow the farm device to display an optically readable representation of data at a user interface of the farm device, wherein the farm device is placed within or inside an installation allowing access only for authorized users, which installation is controlled and monitored by means of the farm control and monitoring system; receiving image data as well as a pairing request message from a mobile terminal, the pairing request message requesting the server to allow pairing of the mobile terminal with a farm control and monitoring system associated with the image data; comparing the received image data against stored image data to check whether the server is arranged to serve a farm control and monitoring system associated with the received image data; and when it is determined that the received image data matches stored image data, approving the request for pairing the mobile terminal with the farm control and monitoring system.

The method may additionally comprise transmitting an acknowledgement (ACK) message to the mobile terminal. Also, the method may comprise transmitting, to the mobile terminal, data relating to the farm control and monitoring system for thereby making it accessible to the mobile terminal. After the pairing request has been approved, the method may additionally comprise receiving information and/or commands from the mobile terminal. Such information and/or commands may be sent to the server for the purpose of changing one or more settings relating to the farm associated with the farm control and monitoring system. Thus, instead of receiving such information and/or commands from the farm control and monitoring system, the server may receive it directly from the mobile terminal.

Yet further, the method may comprise returning a request message to the mobile terminal requesting the mobile terminal to re-transmit image data, when it is determined that the received image data does not match stored image data.

The optically readable representation of data may comprise a barcode. The barcode may be a matrix barcode, e.g., a Quick Response, QR, code.

According to a third aspect, there is provided a method for assisting the pairing of a mobile terminal with a farm control and monitoring system associated with a farm, the method being performed in a farm device associated with the farm control and monitoring system, which farm device is placed within or inside an installation allowing access only for authorized users, which installation is controlled and monitored by means of the farm control and monitoring system, the method comprising: sending a request message to a server, the request message requesting the server to send image data to the farm device to allow the farm device to display, at a user interface thereof, an optically readable representation of data; receiving the image data from the server; forming an optically readable representation of data based on the received image data; and displaying the formed optically readable representation of data at the user interface of the farm device.

According to a fourth aspect, there is provided a method for allowing the pairing of a mobile terminal with a farm control and monitoring system associated with a farm. The method comprises: a mobile terminal reading an optically readable representation of data placed within or inside an installation allowing access only for authorized users, which installation is controlled and monitored by means of the farm control and monitoring system; the mobile terminal forming image data based on the read representation of data; the mobile terminal transmitting the image data as well as a pairing request message to a server, the pairing request message requesting the server to allow pairing of the mobile terminal with a farm control and monitoring system associated with the image data; the server receiving the image data as well as the pairing request message from the mobile terminal; the server comparing the received image data against stored image data to check whether the server is arranged to serve a farm control and monitoring system associated with the received image data; and when it is determined that the received image data matches stored image data, the server approving the request for pairing the mobile terminal with the farm control and monitoring system.

According to a fifth aspect, there is provided a farm device associated with a farm control and monitoring system, which farm device is placed within or inside an installation allowing access only for authorized users, which installation is controlled and monitored by means of the farm control and monitoring system, the farm device comprising: means for sending a request message to a server, the request message requesting the server to send image data to the farm device to allow the farm device to display, at a user interface thereof, an optically readable representation of data; means for receiving the image data from the server; means for forming an optically readable representation of data based on the received image data; and means for displaying the formed optically readable representation of data at the user interface of the farm device.

According to a sixth aspect, there is provided a system, comprising: a farm control and monitoring system and an optically readable representation of data associated with the control and monitoring system, which optically readable representation of data is placed within or inside an installation allowing access only for authorized users, which installation is controlled and monitored by means of the farm control and monitoring system; a mobile terminal, comprising: means for reading the optically readable representation of data; means for forming image data based on the read representation of data; and means for transmitting the image data as well as a pairing request message to a server, the pairing request message requesting the server to allow pairing of the mobile terminal with a farm control and monitoring system associated with the image data; and a server, comprising: means for receiving image data as well as a pairing request message from a mobile terminal, the pairing request message requesting the server to allow pairing of the mobile terminal with a farm control and monitoring system associated with the image data; means for comparing the received image data against stored image data to check whether the server is arranged to serve a farm control and monitoring system associated with the received image data; and means for approving the request for pairing the mobile terminal with the farm control and monitoring system.

According to yet other aspects there are provided systems comprising any combination of the different aspects of the herein disclosed mobile terminals, servers and/or farm devices.

Various embodiments of the invention described herein allow for a user, e.g. a farmer, to pair a mobile terminal such as a smartphone with a farm control and monitoring system. Thus, a user can access information about the controlled and monitored installation, e.g. the farm, via the mobile terminal of the user from anywhere and at any time the user finds most convenient. This gives the user flexibility. Also, it helps the user making proper decisions at the right times. Also, once the mobile terminal has been paired with the farm control and monitoring system, the user may send information or commands from the mobile terminal to the server, e.g., in order to change settings relating to certain equipment or an individual animal of a certain farm. Thus, the user does not necessarily have to walk the distance to a farm device of the farm control and monitoring system within the installation (e.g. farm) each time he or she wants to change settings. Instead, the user can change the settings by means of the mobile terminal while on the fly, e.g. when walking around within, or inside, the installation, This also provides for improved flexibility for the user. Yet further, embodiments described herein require no or little manual input by the user. This may allow for increased accuracy and/or security compared to previous solutions where passwords and/or codes are manually entered at a laptop computer. This may be especially important in non-clean environments such as farms where it may be comparatively more difficult to operate a keyboard or a similar user interface. Moreover, embodiments described herein do not require skilled users. Instead, the user only has to read an optically readable representation of data, e.g. by reading a QR code by means of a reader (e.g., comprising a camera) of the mobile terminal. This reduces the risk of errors being made when pairing the mobile terminal with the farm control and monitoring device.

### BRIEF DESCRIPTION OF THE DRAWINGS

These and other aspects, features and advantages of the invention will be apparent and elucidated from the following description of embodiments of the present invention, reference being made to the accompanying drawings, in which:
Figure 1 is a schematic diagram illustrating an exemplary environment where embodiments presented herein can be applied;
Figure 2A is a schematic diagram illustrating some modules of an embodiment of a mobile terminal;
Figure 2B is a schematic diagram illustrating modules of another embodiment of a mobile terminal;
Figure 3 schematically shows one example of a computer program product comprising computer readable means;
Figure 4A is a schematic diagram illustrating some modules of an embodiment of a server;
Figure 4B is a schematic diagram illustrating some modules of another embodiment of a server;
Figure 5 schematically shows one example of a computer program product comprising computer readable means;
Figure 6A is a schematic diagram illustrating some modules of an embodiment of farm device associated with a farm control and monitoring system;
Figure 6B is a schematic diagram illustrating some modules of another embodiment of farm device associated with a farm control and monitoring system;
Figure 7 schematically shows one example of a computer program product comprising computer readable means;
Figure 8A is a flow chart illustrating a method performed by a mobile terminal according to an embodiment of the invention;
Figure 8B is a flow chart illustrating a method performed by a mobile terminal according to an embodiment of the invention;
Figure 9 is a flow chart illustrating a method performed by a server according to an embodiment of the invention; and
Figure 10 is a flow chart illustrating a method performed by a farm device according to an embodiment of the invention.

### DETAILED DESCRIPTION

The invention will now be described more fully hereinafter with reference to the accompanying drawings, in which certain embodiments of the invention are shown. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art. Like numbers refer to like elements throughout the description.

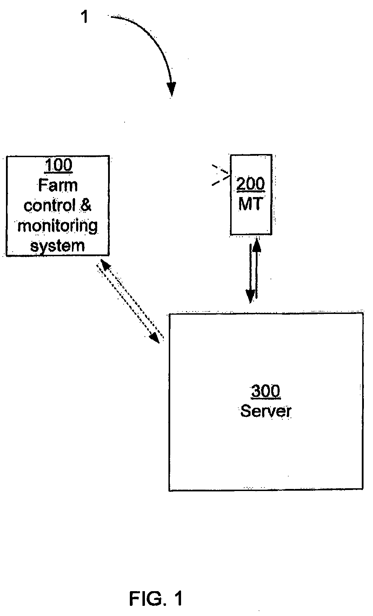

Figure 1 is a schematic diagram illustrating an exemplary environment where embodiments presented herein can be applied. The system 1, sometimes also referred to as a farm management system, comprises a farm control and monitoring system 100 and a server 300. The illustrated system 1 also comprises a mobile terminal, MT, 200.

The farm control and monitoring system 100 is a system for controlling and monitoring various aspects of farm. The farm control and monitoring system 100 may, for example, be configured to control and monitor one or more of the following: arrangements for automated milking production arrangements, arrangements for automated animal comfort, arrangements for automated animal feeding, and arrangements for general herd management.

The mobile terminal, MT, 200 is also known as a mobile communication terminal, a user terminal or a user equipment (UE). In preferred embodiments, the mobile terminal is a smart phone. Alternatively, the mobile terminal may be a mobile telephone or a cellphone.

The server 300 is a server, which is configured to serve a plurality of farm control and monitoring systems associated with respective farms. The server 300 can be said to serve many different farm control and monitoring systems, wherein each of the farm control and monitoring systems are associated with the server in some way, e.g. by having a subscription to that specific server 300. In the illustrated embodiment, the farm control and monitoring system 100 may be associated with the server 300.

With reference to Fig. 1, an exemplary embodiment of a pairing process for pairing the mobile terminal 200 with the farm control and monitoring system 100 will now be described.

In an initial step, typically but not necessarily performed at the site, or installation, where the farm control and monitoring system 100 is physically located, a user (typically, but not necessarily, a farmer) uses his or her mobile terminal, MT, 200 to read an optically readable representation of data. In preferred embodiments, the optically readable representation of data comprises a barcode. The barcode may be a matrix barcode, such as, e.g. a Quick Response (QR) code. Some general principles about QR codes are discussed in the European Patent, EP 0 672 994 B1. To this end, the mobile terminal 200 may comprise a means for reading the optically readable representation of data. The means for reading the optically readable representation of data may comprise a reader. The reader may comprise a camera.

The optically readable representation of data may be placed within or inside the installation, which is controlled and monitored by means of the farm control and monitoring system 100. For example, the optically readable representation of data may be attached to a wall inside the installation. Alternatively, the readable representation of data may be attached to a farm device associated with the farm control and monitoring system 100. Since the installation is generally a closed environment, e.g. a farm, allowing access only for authorized users (e.g. farmers), having the optically readable representation of data attached at a wall inside the installation or attached at a farm device of the farm control and monitoring system 100 generally ensures acceptable security.

In an advantageous embodiment, however, the user can instead operate a user interface of the farm device associated with the farm control and monitoring system 100 in order to send a request message to the server 300, the request message requesting the server to send image data to the farm device to allow the farm device to display, at a user interface thereof, an optically readable representation of data. The server 300 may thus be configured to transmit image data to the farm device associated with the farm control and monitoring system 100 to allow the farm device to display the optically readable representation of data at the user interface of the farm device. The farm device can receive the image data from the server 300. The farm device is further configured to form an optically readable representation of data based on the received image data, and display the formed, or created, optically readable representation of data at the user interface of the farm device. When the optically readable representation of data is displayed at the farm device, e.g. at a monitor screen or at a display screen of the farm control and monitoring system 100, the user uses his or her mobile terminal 200 to read the displayed optically readable representation of data from the farm device. Sending a request from a farm device to the server for allowing the displaying of the optically readable representation of data at the farm device is advantageous as it may provide for even better security.

In other words, in this advantageous embodiment, a user bringing his/her mobile terminal 200 can enter the installation (e.g. the farm) and walk to the farm device. At the farm device, the user operates the user interface of the farm device in order to request the server to send an optically readable representation of data, e.g. in the form of a QR code, to the farm device for displaying at the user interface of the farm device. Once the optically readable representation of data (e.g. QR code) is displayed at the user interface of the farm device, the user may read the optically readable representation of data directly from the user interface of the farm device. For example, if the optically readable representation of data is a QR code, the user may read the QR code by means of a reader (e.g. a QR code reader) of the mobile terminal as will be further detailed herein.

After the initial step of reading the optically readable representation of data, image data is formed, or created, based on the read representation of data. As used herein, image data refers to any data formed based on the read representation of data, which data is transmittable between the mobile terminal and the server. That is, the data is of any data format, which is suitable for transmission between the mobile terminal and the server. The image data as well as a pairing request message is sent from the mobile terminal 200 to the server 300. The pairing request message requests the server 300 to allow pairing of the mobile terminal 200 with the farm control and monitoring system 100 associated with the image data.

Next, the server 300 receives image data as well as the pairing request message from the mobile terminal 200. The server compares the received image data against stored image data to check whether the server 300 is arranged to serve the farm control and monitoring system 100 associated with the received image data, i.e. a farm in question. When it is determined that the received image data matches stored image data, the server 300 approves the request for pairing the mobile terminal 200 with the farm control and monitoring system 100. When the server 300 approves the request for pairing the mobile terminal 200 with the farm control and monitoring system 100, it may transmit an acknowledgement (ACK) message to the mobile terminal for thereby notifying the mobile terminal 200 that the request is approved. Additionally, the server 300 may begin transmitting data relating to the farm control and monitoring system 100 to the mobile terminal 200 for thereby making this data accessible to the mobile terminal 200. Hence, data that is already accessible to the farm control and monitoring system is made accessible to the mobile terminal too. The mobile terminal 200 can be said to be paired with the farm control and monitoring system 100 associated with a farm in question.

Also, as soon as the server has approved the pairing request, it may be possible to transmit, i.e. send, information and/or commands from the mobile terminal to the server. The information and/or commands may be sent to the server for the purpose of changing one or more settings relating to the farm associated with the farm control and monitoring system. Such setting may, for example, relate to a certain equipment of the farm in question. Additionally, or alternatively, such setting may relate to a parameter value of a controlled and monitored individual animal. In other words, it may become possible to control various settings relating to the farm directly from the mobile terminal. This is advantageous as the user can change settings while on the fly, e.g. when walking inside the farm, instead of having to walk the distance to the farm device of the farm control and monitoring system each time he or she wants to change a setting. This may increase flexibility as well as the speed of undertaking corrective measures, when necessary or appropriate.

Alternatively, when it is determined by the server 300 that the received image data does not match stored image data, the server 300 may send a request message to the mobile terminal 200 requesting the mobile terminal to re-transmit image data. For example, since the optically readable representation of data is read from a farm device, which is typically read in a non-clean environment such as a farm, the image data may sometimes be of a too poor quality and the optical representation of data may have to be re-read before the server can find a match between any received image data and stored image data. In some embodiments, the server 300 is configured to send this request message only once or twice in order to limit the number of pairing attempts. In case the server cannot find a match between received image data and stored image data after a few (i.e., typically one, two or three) attempts, this may be an indication that the server 300 is not configured to serve a farm associated with the received image data.

Additionally, or alternatively, the server 300 may send a negative acknowledgement (NACK) message to the mobile terminal 200 when the server cannot find a match between the received image data and stored image data. This way, the mobile terminal 200 can be notified that the pairing request is not approved by the server 300. As a consequence, the mobile terminal 200 will not be paired with the farm control and monitoring device 100 in question.

By pairing the mobile terminal 200 with the farm control and monitoring system 100, the user can subsequently access information about the controlled and monitored installation, e.g. the farm, by means of the mobile terminal 200 from anywhere and at any time the user finds most convenient. This provides for improved flexibility. Also, it helps the user making proper decisions at proper times. Also, once the mobile terminal has been paired with the farm control and monitoring system, the user may send information or commands from the mobile terminal to the server, e.g., in order to change settings relating to certain equipment or an individual animal. Thus, the user does not necessarily have to walk the distance to a farm device of the farm control and monitoring system within the installation (e.g. farm) each time he or she wants to change settings. This provides for improved flexibility for the user. Moreover, the above-mentioned process of pairing the farm control and monitoring system 100 with the mobile terminal 200 does not require any manual input, or at least it requires only limited or little input by the user. Thus, this pairing process can provide for increased accuracy and/or security compared to previous solutions where passwords and/or codes have to be manually entered at a laptop computer. Moreover, the pairing process does not require skilled users. This reduces the risk of errors being made when pairing the mobile terminal 200 with the farm control and monitoring system 100.

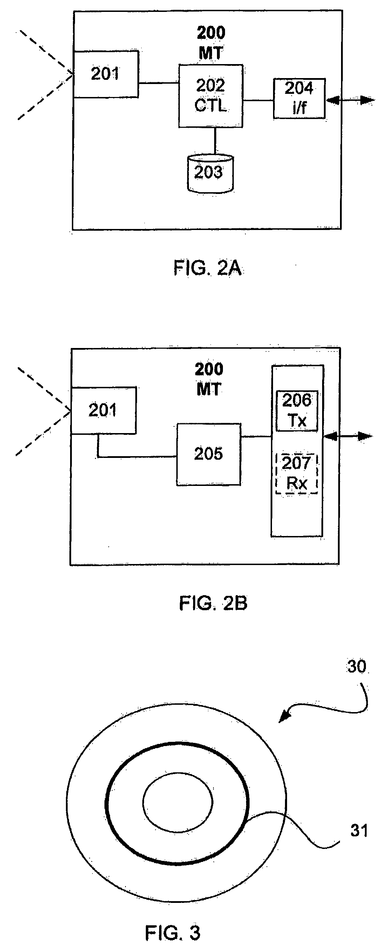

Figure 2A is a schematic diagram illustrating some modules of an embodiment of the mobile terminal 200 shown in figure 1. In an advantageous embodiment, the mobile terminal 200 is a smart phone. In other embodiments, the mobile terminal 200 may be a mobile phone or a cellphone. The mobile terminal comprises means 201 for reading an optically readable representation of data, means 202, 203 for forming image data based on the read representation of data, and means 204 for transmitting the image data as well as a pairing request message to a server, the pairing request message requesting the server to allow pairing of the mobile terminal with a farm control and monitoring system associated with the image data. As described hereinabove, the optically readable representation of data may comprise a barcode. The barcode may be a matrix barcode, e.g., a QR code. Additionally, the mobile terminal 200 may comprise means 204 for receiving an acknowledgement, ACK, message from the server 300, when it has been determined by the server 300 that the server allows pairing of the mobile terminal 200 with the farm control an monitoring system 100, after which ACK message data relating to the farm control and monitoring system 100 is accessible to the mobile terminal. Additionally, the mobile terminal may comprise means 204 for receiving data relating to the farm control and monitoring system. Yet further, the mobile terminal may comprise means 204 for transmitting information and/or commands to the server.
In an advantageous embodiment, a processor 202 is provided using any suitable central processing unit (CPU), microcontroller, digital signal processor (DSP), etc., capable of executing a computer program comprising computer program code, the computer program being stored in a memory 203. The memory 203 can be any combination of random access memory (RAM) and read only memory (ROM). The memory may e.g. also comprise persistent storage, which, for example, can be any single one or combination of magnetic memory, optical memory, or solid state memory or even remotely mounted memory. The mobile terminal 200 may also comprise a reader 201, which is configured to read an optically readable representation of data. The reader 201 may comprise a camera. In some embodiments, the reader 201 can be implemented as a barcode reader for reading a barcode, e.g. a matrix barcode such as a QR code. Moreover, the mobile terminal may comprise a communication interface 204 arranged for wireless communication. The communication interface 204 may comprise a transmitter. Also, the communication interface 204 may comprise a receiver. The wireless communication may comply with any or a combination of UMTS (Universal Mobile Telecommunications System), CDMA2000 (Code Division Multiple Access 2000), LTE (Long Term Evolution), GSM (Global System for Mobile Communications), WLAN (Wireless Local Area Network), etc. When the above-mentioned computer program code is run in the processor 202 of the mobile terminal 200, this causes the mobile terminal 200 to form image data based on a read representation of data and to transmit, via the communication interface 204, the image data as well as a pairing request message to a server, the pairing request message requesting the server to allow pairing of the mobile terminal with a farm control and monitoring system associated with the image data. Any communication to and from the server 300 (and other devices) may be via the communication interface 204. That is to say that, e.g., any ACK or NACK messages from the server 300 can be received by the mobile terminal 200 via the communication interface 204. Also, when it has been determined by the server 300 that the server allows pairing of the mobile terminal 200 with the farm control and monitoring system 100, data relating to the farm control and monitoring system 100 can be received by the mobile terminal 200 by means of the communication interface 204. Yet further, information and/or command may be transmitted to the server via the communication interface 204.

Figure 2B is a schematic diagram illustrating some modules of another exemplary embodiment of a mobile terminal 200. In an advantageous embodiment, the mobile terminal 200 is a smart phone. In other embodiments, the mobile terminal 200 may be a mobile phone or a cellphone. The mobile terminal 200 may be used for allowing the pairing of the mobile terminal with a farm control and monitoring system associated with a farm. The mobile terminal 200 comprises a reader 201 configured to read an optically readable representation of data. Similar to above, the optically readable representation of data may comprise a barcode, such as a matrix barcode. A matrix barcode may be a Quick Response, QR, code. The reader 201 may be configured to read the optically readable representation of data from a farm device associated with the farm.

Furthermore, an image data forming unit 205 is provided. This image data forming unit 205 is configured to form image data based on the read representation of data. The image data forming unit may comprise an encoder and/or a decoder. An encoder may be configured to transform an optically readable representation of data into image data. A decoder may be configured to transform image data into an optically readable representation of data.

The mobile terminal also comprises a transmitter 206 configured to transmit the image data as well as a pairing request message to a server, the pairing request message requesting the server to allow pairing of the mobile terminal with a farm control and monitoring system associated with the image data. The mobile terminal may also comprise a receiver 207 configured to receive, e.g., an acknowledgement, ACK, message from the server, when it has been determined by the server that the server allows pairing of the mobile terminal with the farm control and monitoring system. Moreover, the receiver 207 may be further configured to receive data relating to the farm control and monitoring system. Yet further, the transmitter 206 may be configured to transmit information and/or commands to the server.

According to some embodiments and with reference to figure 3, there is provided a computer program 31 for allowing the pairing of a mobile terminal 200 with a farm control and monitoring system 100 associated with a farm. The computer program may comprise computer program code which, when run in the processor of the mobile terminal 200, causes the mobile terminal 200 to: read an optically readable representation of data; form image data based on the read representation of data; and transmit the image data as well as a pairing request message to a server, the pairing request message requesting the server to allow pairing of the mobile terminal with a farm control and monitoring system associated with the image data.

According to some embodiments and with reference to figure 3, a computer program product is provided. The computer program product comprises the above-mentioned computer program 31 and a computer readable means 30 on which the computer program is stored. In an advantageous embodiment, the computer readable means is a software package (also sometimes referred to as software application, application or APP) distributed over a network, such as the Internet. In other embodiments, the computer readable means may be a solid state memory, such as flash memory. In yet other embodiments, the computer readable means could be a CD (compact disc) 30 as is illustrated in figure 3, a DVD (digital versatile disc) or a blue-ray.

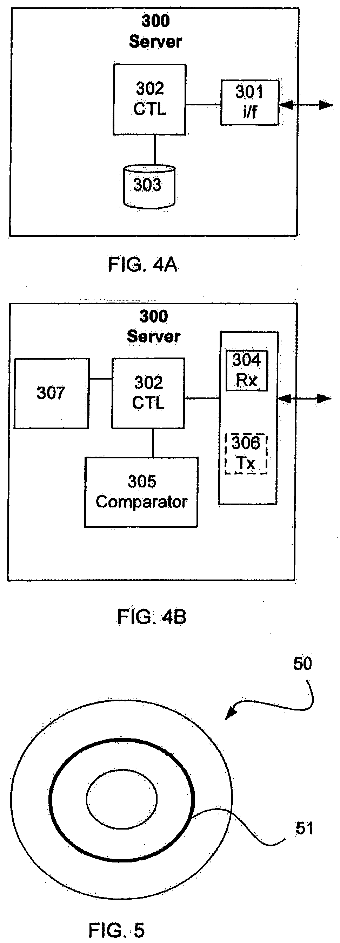

Figure 4A is a schematic diagram illustrating some modules of an embodiment of the server, e.g. a server 300 as shown in Fig. 1. The server 300 comprises means 301 for receiving image data as well as a pairing request message from a mobile terminal, the pairing request message requesting the server to allow pairing of the mobile terminal with a farm control and monitoring system associated with the image data, means 302, 303 for comparing the received image data against stored image data to check whether the server is arranged to serve a farm control and monitoring system associated with the received image data ; and means 302 for approving the request for pairing the mobile terminal with the farm control and monitoring system associated with the farm when it is determined that the received image data matches stored image data. Additionally, the server 300 may comprise means 301 for transmitting, to the mobile terminal 200, an ACK (and/or NACK) message, and means 301 for transmitting, to the mobile terminal, data relating to the farm control and monitoring system such that it becomes accessible to the mobile terminal. Optionally, the server 300 may additionally comprise means 301 for receiving information and/or commands (e.g. for changing settings relating to the farm in question) from the mobile terminal 200. Yet further, the server 300 may comprise means 301 for returning a request message to the mobile terminal requesting the mobile terminal to re-transmit image data when it is determined that the received image data does not match stored image data.

In an advantageous embodiment, a processor 302 is provided using any suitable central processing unit (CPU), microcontroller, digital signal processor (DSP), etc., capable of executing computer program comprising computer program code, the computer program being stored in a memory 303. The memory 303 can be any combination of random access memory (RAM) and read only memory (ROM). The memory may also comprise persistent storage, which, for example, can be any single one or combination of magnetic memory, optical memory, or solid state memory or even remotely mounted memory.

Moreover, the server may comprise a communication interface 301 arranged for wireless communication. The wireless communication may comply with any or a combination of UMTS (Universal Mobile Telecommunications System), CDMA2000 (Code Division Multiple Access 2000), LTE (Long Term Evolution), GSM (Global System for Mobile Communications), WLAN (Wireless Local Area Network), etc. When the above-mentioned computer program code is run in the processor 302 of the server 300, this causes the server 300 to: compare received image data against stored image data to check whether the server 300 is arranged to serve a farm control and monitoring system 100 associated with the received image data, and to approve the request for pairing the mobile terminal 200 with the farm control and monitoring system associated with the farm when it is determined that the received image data matches stored image data.

Any communication with the mobile terminal 200 (and other devices) may be via the communication interface 301. The communication interface 301 may comprise a receiver. The communication interface 301 may also comprise a transmitter. The communication interface 301 is configured to receive image data as well as a pairing request message from a mobile terminal 200, the pairing request message requesting the server to allow pairing of the mobile terminal with a farm control and monitoring system associated with the image data. Additionally, the server 300 may be configured to transmit an ACK message (and/or NACK message) to the mobile terminal 200 utilizing the communication interface 301. Furthermore, the server 300 may be configured to transmit data relating to the farm control and monitoring system 100 to the mobile terminal utilizing the communication interface 301. This way, data relating to the farm and control system 100 may become accessible to the mobile terminal 200.

Moreover, the server 300 may be configured to receive, via communication interface 301, information and/or commands (e.g. for changing settings relating to the farm in question) from the mobile terminal 200. Yet further, the communication interface 301 may additionally be utilized for returning a request message to the mobile terminal 200 requesting the mobile terminal to re-transmit image data when it is determined by the server 300 that the received image data does not match stored image data.

Figure 4B is a schematic diagram illustrating some modules of another embodiment of the server 300. The server 300 may be used for allowing the pairing of a mobile terminal with a farm control and monitoring system associated with a farm. The server comprises: a receiver 304 configured to receive image data as well as a pairing request message from a mobile terminal, the pairing request message requesting the server to allow pairing of the mobile terminal with a farm control and monitoring system associated with the image data. The optically readable representation of data may comprise a barcode, such as a matrix barcode. A matrix barcode may comprise a Quick Response, QR, code.

A comparator 305 is also provided. The comparator 305 is configured to compare the received image data against stored image data to check whether the server is arranged to serve a farm control and monitoring system associated with the received image data. A controller 302 is configured to approve the request for pairing the mobile terminal with the farm control and monitoring system when it is determined that the received image data matches stored image data. In the illustrated figure 4B, the comparator 305 and the controller 302 are shown as two separate units. However, in other embodiments the functions of the comparator 305 and the controller could be implemented in one single unit or component.

The server may also comprise a transmitter 306. The transmitter 306 may be configured to transmit, i.e. send, an acknowledgement (ACK) message to the mobile terminal. Additionally, the transmitter 306 may be configured to transmit, to the mobile terminal, data relating to the farm control and monitoring system for thereby making it accessible to the mobile terminal. Moreover, the above-mentioned receiver 304 may be configured to receive information and/or commands (e.g. for changing settings relating to the farm in question) from the mobile terminal 200 after the ACK message has been sent to the mobile terminal 200.

The transmitter 306 may be further configured to return a request message to the mobile terminal for requesting the mobile terminal to re-transmit image data when it has been determined, by the controller 302, that received image data does not match stored image data.

The server 300 may also comprise an image data forming unit 307. The image data forming unit 307 may comprise an encoder and/or a decoder. An encoder may be configured to transform an optically readable representation of data into image data. A decoder may be configured to transform image data into an optically readable representation of data.

According to some embodiments, there is provided a computer program 51 (see figure 5) for allowing the pairing of a mobile terminal 200 with a farm control and monitoring system 100 associated with a farm. The computer program may comprise computer program code which, when run in a processor of a server 300, causes the server to: receive image data as well as a pairing request message from a mobile terminal, the pairing request message requesting the server to allow pairing of the mobile terminal with a farm control and monitoring system associated with the image data; compare the received image data against stored image data to check whether the server is arranged to serve a farm control and monitoring system associated with the received image data; and when it is determined that the received image data matches stored image data, approving the request for pairing the mobile terminal with the farm control and monitoring system.

Fig. 5 schematically shows one example of a computer program product comprising computer readable means 50. On this computer readable means 50, a computer program 51 can be stored, which computer program, when run on the processor 302 of the server 300, can cause the server to execute the method according to various embodiments described in the present disclosure. In this example, the computer program readable means 50 is an optical disc, such as a CD (compact disc), a DVD (digital versatile disc) or a blue-ray. The computer-readable means may alternatively be a solid state memory, such as flash memory or a software package (also sometimes referred to as software application, application or APP) distributed over a network, such as the Internet.

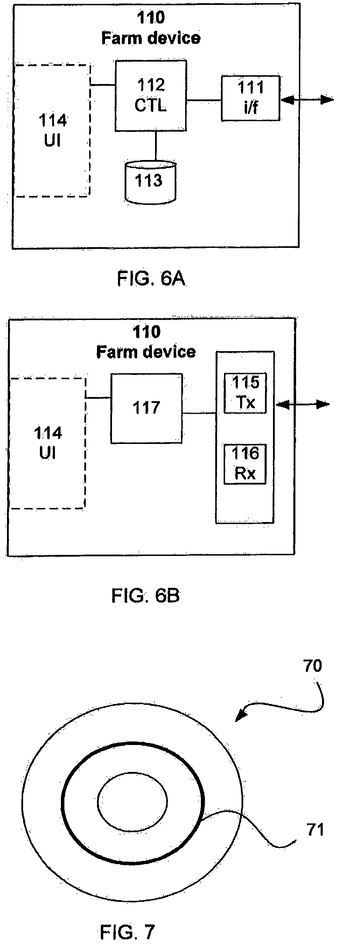

Figure 6A is a schematic diagram illustrating some modules of an embodiment of a farm device 110 associated with a farm control and monitoring system 100. The farm control and monitoring system 100 is associated with a farm. The farm device 110 may advantageously, but not necessarily, be part of the farm control and monitoring system 100. The farm device 110 comprises: means 111 for sending a request message to a server 300, the request message requesting the server to send image data to the farm device to allow the farm device to display, at a user interface 114 thereof, an optically readable representation of data; means 111 for receiving the image data from the server; means 112, 113 for forming an optically readable representation of data based on the received image data; and means 112, 113, 114 for displaying the formed optically readable representation of data at the user interface 114 of the farm device 110.

In an advantageous embodiment, a processor 112 is provided using any suitable central processing unit (CPU), microcontroller, digital signal processor (DSP), etc., capable of executing computer program comprising computer program code, the computer program being stored in a memory 113. The memory 113 can be any combination of random access memory (RAM) and read only memory (ROM). The memory may also comprise persistent storage, which, for example, can be any single one or combination of magnetic memory, optical memory, or solid state memory or even remotely mounted memory. Moreover, the farm device 110 may comprise a communication interface 111 arranged for wireless communication. The communication interface 111 may comprise a transmitter. The communication interface 111 may also comprise a receiver. The wireless communication may comply with any or a combination of UMTS (Universal Mobile Telecommunications System), CDMA2000 (Code Division Multiple Access 2000), LTE (Long Term Evolution), GSM (Global System for Mobile Communications), WLAN (Wireless Local Area Network), etc. When the above-mentioned computer program code is run in the processor 112 of the farm device, this causes the farm device 110 to form an optically readable representation of data based on received image data from the server 300; and to display the formed optically readable representation of data at the user interface 114 of the farm device 110.

Any communication with the server 300 (and other devices) may be via the communication interface 111. The communication interface 111 may comprise a transmitter. The communication interface 111 may also comprise a receiver. For example, the farm device 110 may be configured to send the request message to a server 300 via the communication interface 111. Also, the farm device 110 may be configured to receive transmissions, e.g. image data, from the server 300 via said communication interface 111.

Figure 6B is a schematic diagram illustrating some modules of an alternative embodiment of a farm device 110 associated with a farm control and monitoring system 100. The farm control and monitoring system 100 is associated with a farm. The farm device 110 may advantageously, but not necessarily, be part of the farm control and monitoring system 100. The farm device 110 comprises a transmitter 115 configured to transmit a request message to a server, the request message requesting the server to send image data to the farm device to allow the farm device to display an optically readable representation of data at the user interface 114 thereof. A receiver 116 is also provided. The receiver 116 is configured to receive the image data from the server. Yet further, there is a data representation forming unit 117 configured to form an optically readable representation of data based on the received image data. The image data forming unit may comprise an encoder and/or a decoder. An encoder may be configured to transform an optically readable representation of data into image date. A decoder may be configured to transform image data to transform image data into an optically readable representation of data. The farm device 110 also comprises a user interface 114, which is configured to display the thus formed optically readable representation of data. The optically readable representation of data may be displayed at the user interface 114 in the form of a barcode, such as a matrix barcode (e.g. a QR code).

According to some embodiments and as illustrated in figure 7, there is provided a computer program 71 for assisting the pairing of a mobile terminal 200 with a farm control and monitoring system 100 associated with a farm. The computer program may comprise computer program code which, when run in a processor 112 of a farm device 110, causes the farm device 110 to: send a request message to a server 300, the request message requesting the server to send image data to the farm device to allow the farm device to display, at a user interface thereof, an optically readable representation of data; receive the image data from the server; forming an optically readable representation of data based on the received image data; and displaying the formed optically readable representation of data at the user interface 114 of the farm device 110.

Fig. 7 schematically shows one example of a computer program product comprising computer readable means 70. On this computer readable means 70, a computer program 71 can be stored, which computer program, when run on the processor 112 of the farm device 110, can cause the farm device 110 to execute the method according to various embodiments described in the present disclosure. In this example, the computer program readable means 70 is an optical disc, such as a CD (compact disc), a DVD (digital versatile disc) or a blue-ray. The computer-readable means may alternatively be a solid state memory, such as flash memory or a software package (also sometimes referred to as software application, application or APP) distributed over a network, such as the Internet.

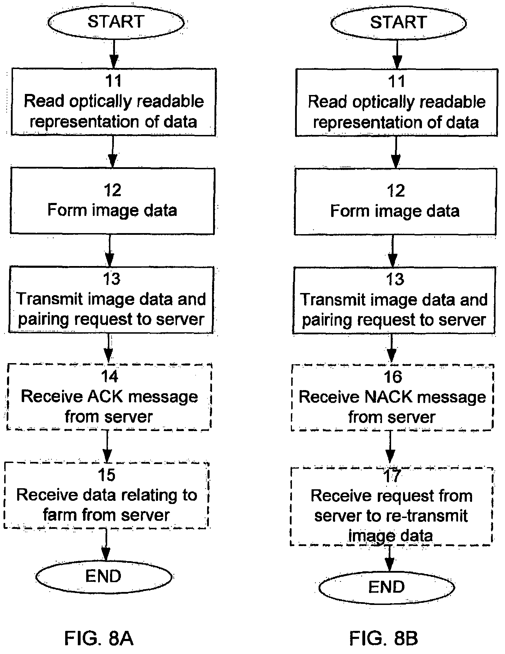

Figure 8A is a flow chart illustrating a method according to an embodiment executed by a mobile terminal, e.g. the mobile terminal illustrated in figure 1. The purpose of the method is to allow for pairing of the mobile terminal 200 with a farm control and monitoring system 100 associated with a farm.

In an initial step 11, an optically readable representation of data is read. This step 11 may comprise reading the optically readable representation of data from a farm device associated with the farm. For example, the farm device may be a farm device being part of a farm control and monitoring system 100, which is used to control and monitor various aspects of a farm. As described hereinabove, the optically readable representation of data may comprise a barcode. The barcode may be a matrix barcode, e.g. a QR code. In some embodiments, the optical representation of data is read by means of a reader of the mobile terminal 200. The reader may comprise a camera. Next, in a step 12, image data is formed based on the read representation of data. In a subsequent step 13, the formed or created image data as well as a pairing request are transmitted to a server 300. The pairing request message comprises a message requesting the server to allow pairing of the mobile terminal 200 with a farm control and monitoring system 100 associated with the image data.

The method may further comprise a step 14 of receiving an acknowledgement, ACK, message from the server 300, when it has been determined by the server 300 that the server 300 allows pairing of the mobile terminal 200 with the farm control and monitoring system 100.

Furthermore, the method may further comprise the step 15 of receiving data relating to the farm control and monitoring system, when it has been determined by the server that the server allows pairing of the mobile terminal with the farm control and monitoring system 100. Also as has been described earlier, after the ACK message has been received from the server, it may be possible to begin transmitting information and/or commands from the mobile terminal 200 to the server 300, e.g., for the purpose of changing various settings relating to the farm. That is to say that once the mobile terminal 200 is paired with the farm control and monitoring system 100, the mobile terminal 200 may i) be configured to access data relating to the farm in question and/or may ii) be configured to control various settings relating to the farm in question.

Figure 8B is a flow chart illustrating a method according to an embodiment executed by a mobile terminal, e.g. the mobile terminal illustrated in figure 1. The method in figure 8B is similar to figure 8A, but differs from figure 8A in the last two method steps. The method steps 11, 12 and 13 correspond to the corresponding method steps illustrated in figure 8A and will not be further explained with respect to figure 8B.

The method may comprise a step 16 of receiving a negative acknowledgement, NACK, message from the server 300, when it has been determined by the server 300 that the server 300 does not allow pairing of the mobile terminal 200 with the farm control and monitoring system 100. This may, e.g., be the case when it has been determined by the server 300 that there is no match between the transmitted image data and image data stored at the server 300.

The method may optionally also comprise a step 17 of receiving a request message from the server 300, the request message requesting the mobile terminal to re-transmit image data. Upon receipt of such request message, the method can begin again, i.e. starting with the initial step 11 of figure 8.

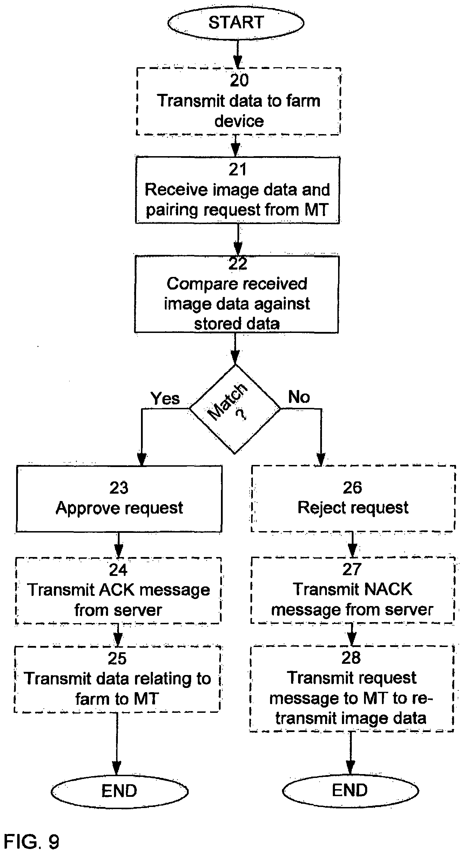

Figure 9 is a flow chart illustrating a method according to an embodiment executed by a server, e.g. the server 300 illustrated in figure 1. The purpose of the method is to allow for pairing of the mobile terminal 200 with a farm control and monitoring system 100 associated with a farm.

In a step 21, the server receives image data as well as a pairing request message from a mobile terminal. The pairing request message requests the server to allow pairing of the mobile terminal with a farm control and monitoring system associated with the image data. Subsequently, the received image data is compared, in step 22, against stored image data to check whether the server is arranged to serve a farm control and monitoring system associated with the received image data.

When it is determined that the received image data matches stored image data, the method continues to step 23. In step 23, the request for pairing the mobile terminal with the farm control and monitoring system is approved. The method may further comprise a step 24 of transmitting an acknowledgement (ACK) message to the mobile terminal 200. The method may additionally comprise a step 25 of transmitting data relating to the farm control and monitoring system for thereby making it accessible to the mobile terminal. Yet further, the method may comprise one ore more steps (not shown) of receiving information and/or commands (e.g. for changing various settings relating to the farm) from the mobile terminal.

On the other hand, when it is determined that the received image data does not match stored image data, the method continues to step 26. In step 26, the request for pairing the mobile terminal with the farm control and monitoring system is rejected. The method may further comprise a step 27 of transmitting a negative acknowledgement (NACK) message to the mobile terminal 200. Optionally, the method may additionally comprise a step 28 of transmitting a request to the mobile terminal 200 for requesting the mobile terminal 200 to re-transmit image data.

In one embodiment, the method illustrated in figure 9 may optionally comprise an additional step 20, being performed prior to step 21. In step 20, image data is transmitted to a farm device associated with the farm control and monitoring system 100 to allow the farm device to display the optically readable representation of data at a user interface of the farm device. This step 20 may be performed upon request, i.e. after the server 300 has received a request message from the farm device, wherein the request message requests the server to send such image data.

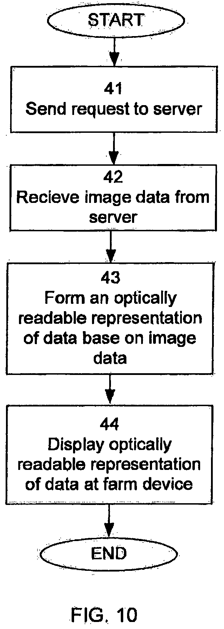

Figure 10 is a flow chart illustrating a method according to an embodiment executed by a farm device. A purpose of this method is to assist in the pairing of a mobile terminal 200 with a farm control and monitoring system 100 associated with a farm.

A user bringing his or her mobile terminal approaches the farm device. At the farm device, the user operates the user interface of the farm device in order to request the server to send an optically readable representation of data, e.g. in the form of a QR code, to the farm device for displaying at the user interface of the farm device. Once the optically readable representation of data (e.g. QR code) is displayed at the user interface of the farm device, the user may read the optically readable representation of data directly from the user interface of the farm device. For example, if the optically readable representation of data is a QR code, the user may read the QR code by means of a reader (e.g. a QR code reader) of the mobile terminal as will be further detailed herein. With respect to figure 10, a request message is thus sent to the server 300 in an initial step 41. The request message requests the server to send image data to the farm device to allow the farm device to display an optically readable representation of data at a user interface of the farm device. Next, in step 42, image data is received from the server 300. In a subsequent step 43, an optically readable representation of data is formed, or created, based on the received image data. Finally, in a step 44, the formed optically readable representation of data is displayed at the user interface of the farm device. This way, the user can use his or her mobile terminal 200 to read the optically readable representation of data from the farm device.

Various embodiments of the invention described in this disclosure allow for a user to pair a mobile terminal with a farm control and monitoring system. Thus, a user can subsequently access information about the controlled and monitored installation, e.g. the farm, via his or her mobile terminal from anywhere and at any time the user finds most convenient. For example, a user bringing his mobile terminal in the form of a smart phone may access data relating to a farm while walking around within, or inside, the farm. This provides for improved flexibility. Also, it helps the user making proper decisions at the right times. Also, once the mobile terminal has been paired with the farm control and monitoring system, the user may send information or commands from the mobile terminal to the server, e.g., in order to change settings relating to certain equipment or an individual animal. Thus, the user does not necessarily have to walk the distance to a farm device of the farm control and monitoring system within the installation (e.g. farm) each time he or she wants to change settings. Instead, the user can change the settings by means of the mobile terminal while on the fly, e.g. when walking around within, or inside, the installation, This also provides for improved flexibility for the user. Moreover, herein disclosed embodiments of pairing the farm control and monitoring system with the mobile terminal do not require excessive manual input by the user. This may allow for increased accuracy and/or security compared to previous solutions where passwords and or codes have to be manually entered at a laptop computer. Moreover, the pairing of the mobile terminal 200 and the farm control and monitoring system according to herein disclosed embodiments does not require very skilled users. This reduces the risk of errors being made when pairing the mobile terminal with the farm control and monitoring device, compared with previous solutions where the user had to manually enter, or type in, relatively long codes or passwords.

Although the present invention has been described above with reference to specific embodiments, it is not intended to be limited to the specific form set forth herein. Rather, the invention is limited only by the accompanying claims, and other embodiments than the specific above are equally possible within the scope of the appended claims. For instance, although individual features may be included in different embodiments, these may possibly advantageously be combined, and the inclusion of different embodiments does not imply, in any way, that a combination of features from different embodiments is not feasible and/or not advantageous. Also, while various embodiments of the computer programs and the computer program products have been described with reference to some of the figures only, a person with ordinary skill in the art will appreciate that other computer programs and computer program products are also possible. For example, computer programs and/or computer program products for executing methods according to any of the herein described embodiments of the invention are also conceivable.

As used herein, the pairing of the mobile terminal with the farm control and monitoring system may have any duration. That is to say that the duration may be short (e.g. a few hours) or long (e.g. several years). In other words, the duration may not necessarily be temporary. Rather, in advantageous embodiment the duration is in fact permanent in the sense that the pairing lasts until a user actively cancels or revokes the pairing, e.g. by sending a cancellation or revocation command to the server (from either the mobile terminal or the farm device associated with the farm control and monitoring system).

As used herein, the term "comprise/comprises" does not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality. Reference signs in the claims are provided merely as a clarifying example and should not be construed as limiting the scope of the claims in any way.

## Claims

1. A method for allowing the pairing of a mobile terminal with a farm control and monitoring system associated with a farm, the method being performed in the mobile terminal and comprising:
reading (11) an optically readable representation of data placed within or inside a farm installation allowing access only for authorized users, which farm installation is controlled and monitored by means of the farm control and monitoring system;
forming (12) image data based on the read representation of data; and
transmitting (13) the image data as well as a pairing request message to a server, the pairing request message requesting the server to allow pairing of the mobile terminal with the farm control and monitoring system associated with the image data.

2. The method according to claim 1, wherein the step of reading (11) the optically readable representation of data comprises:
reading (11) the optically readable representation of data from a farm device associated with the farm.

3. The method according to claim 1 or 2, further comprising:
receiving (14) an acknowledgement, ACK, message from the server, when it has been determined by the server that the server allows pairing of the mobile terminal with the farm control and monitoring system, after which ACK message data relating to the farm control and monitoring system is accessible to the mobile terminal.

4. The method according to claim 3, further comprising:
receiving (15) data relating to the farm control and monitoring system.

5. A method for allowing the pairing of a mobile terminal with a farm control and monitoring system associated with a farm, the method being performed in a server and comprising:
transmitting (20) image data to a farm device associated with the farm control and monitoring system to allow the farm device to display, at a user interface thereof, an optically readable representation of data, wherein the farm device is placed to display an optically readable representation of data within or inside a farm installation allowing access only for authorized users, which farm installation is controlled and monitored by means of the farm control and monitoring system;
receiving (21) image data as well as a pairing request message from a mobile terminal, the pairing request message requesting the server to allow pairing of the mobile terminal with a farm control and monitoring system associated with the image data;
comparing (22) the received image data against stored image data to check whether the server is arranged to serve a farm control and monitoring system associated with the received image data; and
when it is determined that the received image data matches stored image data, approving (23) the request for pairing the mobile terminal with the farm control and monitoring system.

6. The method according to claim 5, further comprising:
transmitting (24), to the mobile terminal, an acknowledgement message; and
transmitting (25), to the mobile terminal, data relating to the farm control and monitoring system for thereby making it accessible to the mobile terminal.

7. The method according to claim 5, further comprising:
when it is determined that the received image data does not match stored image data, returning (28) a request message to the mobile terminal requesting the mobile terminal to re-transmit image data.

8. A method for assisting the pairing of a mobile terminal with a farm control and monitoring system associated with a farm, the method being performed in a farm device associated with the farm control and monitoring system, which farm device is placed to display an optically readable representation of data within or inside a farm installation allowing access only for the authorized users, which farm installation is controlled and monitored by means of the farm control and monitoring system, the method comprising:
sending (31) a request message to a server, the request message requesting the server to send image data to the farm device to allow the farm device to display, at a user interface thereof, an optically readable representation of data;
receiving (32) the image data from the server;
forming (33) an optically readable representation of data based on the received image data; and
displaying (34) the formed optically readable representation of data at the user interface of the farm device.

9. A method for allowing the pairing of a mobile terminal with a farm control and monitoring system associated with a farm, comprising:
a mobile terminal reading (11) an optically readable representation of data placed within or inside a farm installation allowing access only for authorized users, which farm installation is controlled and monitored by means of the farm control and monitoring system;
the mobile terminal forming (12) image data based on the read representation of data;
the mobile terminal transmitting (12) the image data as well as a pairing request message to a server, the pairing request message requesting the server to allow pairing of the mobile terminal with a farm control and monitoring system associated with the image data;
the server receiving (21) the image data as well as the pairing request message from the mobile terminal; and
the server comparing (22) the received image data against stored image data to check whether the server is arranged to serve a farm control and monitoring system associated with the received image data; and when it is determined that the received image data matches stored image data, the server approving (23) the request for pairing the mobile terminal with the farm control and monitoring system.

10. The method according to any one of the preceding claims, wherein the optically readable representation of data comprises a barcode.

11. The method according to claim 10, wherein the barcode is a matrix barcode.

12. The method according to claim 11, wherein the matrix barcode is a Quick Response, QR, code.

13. A farm device associated with a farm control and monitoring system (100), which farm device is placed to display an optically readable representation of data within or inside a farm installation allowing access only for authorized users, which farm installation is controlled and monitored by means of the farm control and monitoring system, the farm device comprising:
means (111) for sending a request message to a server, the request message requesting the server to send image data to the farm device to allow the farm device to display, at a user interface thereof, an optically readable representation of data;
means (111) for receiving the image data from the server;
means (112, 113) for forming an optically readable representation of data based on the received image data; and
means (114) for displaying the formed optically readable representation of data at the user interface of the farm device.

14. A system (1), comprising:
- a farm control and monitoring system (100) and an optically readable representation of data associated with the control and monitoring system (100), which optically readable representation of data is placed within or inside a farm installation allowing access only for authorized users, which farm installation is controlled and monitored by means of the farm control and monitoring system;
- a mobile terminal (200), comprising: means for reading the optically readable representation of data; means for forming image data based on the read representation of data; and means for transmitting the image data as well as a pairing request message to a server, the pairing request message requesting the server to allow pairing of the mobile terminal with a farm control and monitoring system associated with the image data; and
- a server (300), comprising: means for receiving image data as well as a pairing request message from a mobile terminal, the pairing request message requesting the server to allow pairing of the mobile terminal with a farm control and monitoring system associated with the image data; means for comparing the received image data against stored image data to check whether the server is arranged to serve a farm control and monitoring system associated with the received image data; and means for approving the request for pairing the mobile terminal with the farm control and monitoring system.

## Patentansprüche

1. Verfahren zum Zulassen der Paarung eines mobilen Endgeräts mit einem landwirtschaftlichen Steuerungs- und Überwachungssystem, das einem landwirtschaftlichen Betrieb zugehörig ist, wobei das Verfahren im mobilen Endgerät durchgeführt wird und Folgendes umfasst:
Lesen (11) einer optisch lesbaren Darstellung von Daten, die innerhalb oder in einer landwirtschaftlichen Anlage platziert ist, die nur berechtigten Nutzern Zugriff gewährt, wobei die landwirtschaftliche Anlage von dem landwirtschaftlichen Steuerungs- und Überwachungssystem gesteuert und überwacht wird;
Erstellen (12) von Bilddaten auf der Grundlage der gelesenen Darstellung von Daten; und
Übertragen (13) der Bilddaten sowie einer Paarungsanforderungsnachricht an einen Server, wobei mit der Paarungsanforderungsnachricht eine Anfrage an den Server erfolgt, eine Paarung des mobilen Endgeräts mit dem landwirtschaftlichen Steuerungs- und Überwachungssystem zuzulassen, das den Bilddaten zugehörig ist.

2. Verfahren nach Anspruch 1, wobei der Schritt des Lesens (11) der optisch lesbaren Darstellung von Daten Folgendes umfasst:
Lesen (11) der optisch lesbaren Darstellung von Daten von einer landwirtschaftlichen Vorrichtung, die dem landwirtschaftlichen Betrieb zugehörig ist.

3. Verfahren nach Anspruch 1 oder 2, ferner umfassend:
Empfangen (14) einer Nachricht zur Bestätigung ACK vom Server, wenn vom Server festgestellt wurde, dass der Server die Paarung des mobilen Endgeräts mit dem landwirtschaftlichen Steuerungs- und Überwachungssystem zulässt, wobei nach der ACK-Nachricht Daten, die das landwirtschaftliche Steuerungs- und Überwachungssystem betreffen, für das mobile Endgerät zugänglich sind.

4. Verfahren nach Anspruch 3, ferner umfassend:
Empfangen (15) von Daten, die das landwirtschaftliche Steuerungs- und Überwachungssystem betreffen.

5. Verfahren zum Zulassen der Paarung eines mobilen Endgeräts mit einem landwirtschaftlichen Steuerungs- und Überwachungssystem, das einem landwirtschaftlichen Betrieb zugehörig ist, wobei das Verfahren in einem Server durchgeführt wird und Folgendes umfasst:
Übertragen (20) von Bilddaten an eine landwirtschaftliche Vorrichtung, die dem landwirtschaftlichen Steuerungs- und Überwachungssystem zugehörig ist, damit die landwirtschaftliche Vorrichtung, auf einer Benutzerschnittstelle davon, eine optisch lesbare Darstellung von Daten anzeigen kann, wobei die landwirtschaftliche Vorrichtung so platziert ist, dass sie eine optisch lesbare Darstellung von Daten innerhalb oder in einer landwirtschaftlichen Anlage anzeigt, die nur berechtigten Nutzern Zugriff gewährt, wobei die landwirtschaftliche Anlage von dem landwirtschaftlichen Steuerungs- und Überwachungssystem gesteuert und überwacht wird;
Empfangen (21) von Bilddaten sowie einer Paarungsanforderungsnachricht von einem mobilen Endgerät, wobei mit der Paarungsanforderungsnachricht eine Anfrage an den Server erfolgt, eine Paarung des mobilen Endgeräts mit einem landwirtschaftlichen Steuerungs- und Überwachungssystem zuzulassen, das den Bilddaten zugehörig ist;
Vergleichen (22) der empfangenen Bilddaten mit gespeicherten Bilddaten zum Überprüfen, ob der Server so angeordnet ist, dass er Dienste für ein landwirtschaftliches Steuerungs- und Überwachungssystem bereitstellt, das den empfangenen Bilddaten zugehörig ist; und
wenn festgestellt wird, dass die empfangenen Bilddaten gespeicherten Bilddaten entsprechen, Genehmigen (23) der Anforderung zum Paaren des mobilen Endgeräts mit dem landwirtschaftlichen Steuerungs- und Überwachungssystem.

6. Verfahren nach Anspruch 5, ferner umfassend:
Übertragen (24) einer Bestätigungsnachricht an das mobile Endgerät; und
Übertragen (25) von Daten, die das landwirtschaftliche Steuerungs- und Überwachungssystem betreffen, an das mobile Endgerät, damit sie für das mobile Endgerät zugänglich sind.

7. Verfahren nach Anspruch 5, ferner umfassend:
wenn festgestellt wird, dass die empfangenen Bilddaten gespeicherten Bilddaten nicht entsprechen, Zurücksenden (28) einer Anforderungsnachricht an das mobile Endgerät, mit der angefordert wird, dass das mobile Endgerät Bilddaten erneut überträgt.

8. Verfahren zum Unterstützen der Paarung eines mobilen Endgeräts mit einem landwirtschaftlichen Steuerungs- und Überwachungssystem, das einem landwirtschaftlichen Betrieb zugehörig ist, wobei das Verfahren in einer landwirtschaftlichen Vorrichtung durchgeführt wird, die dem landwirtschaftlichen Steuerungs- und Überwachungssystem zugehörig ist, wobei die landwirtschaftliche Vorrichtung so platziert ist, dass sie eine optisch lesbare Darstellung von Daten innerhalb oder in einer landwirtschaftlichen Anlage anzeigt, die nur berechtigten Nutzern Zugriff gewährt, wobei die landwirtschaftliche Anlage von dem landwirtschaftlichen Steuerungs- und Überwachungssystem gesteuert und überwacht wird, wobei das Verfahren Folgendes umfasst:
Senden (31) einer Anforderungsnachricht an einen Server, wobei mit der Anforderungsnachricht eine Anfrage an den Server erfolgt, Bilddaten an die landwirtschaftliche Vorrichtung zu senden, damit die landwirtschaftliche Vorrichtung, auf einer Benutzerschnittstelle davon, eine optisch lesbare Darstellung von Daten anzeigen kann;
Empfangen (32) der Bilddaten von dem Server;
Erstellen (33) einer optisch lesbaren Darstellung von Daten auf der Grundlage der empfangenen Bilddaten; und
Anzeigen (34) der erstellten optisch lesbaren Darstellung von Daten auf der Benutzerschnittstelle der landwirtschaftlichen Vorrichtung.

9. Verfahren zum Zulassen der Paarung eines mobilen Endgeräts mit einem landwirtschaftlichen Steuerungs- und Überwachungssystem, das einem landwirtschaftlichen Betrieb zugehörig ist, umfassend:
Lesen (11), durch ein mobiles Endgerät, einer optisch lesbaren Darstellung von Daten, die innerhalb oder in einer landwirtschaftlichen Anlage platziert ist, die nur berechtigten Nutzern Zugriff gewährt, wobei die landwirtschaftliche Anlage von dem landwirtschaftlichen Steuerungs- und Überwachungssystem gesteuert und überwacht wird;
Erstellen (12), durch das mobile Endgerät, von Bilddaten auf der Grundlage der gelesenen Darstellung von Daten;
Übertragen (12), durch das mobile Endgerät, der Bilddaten sowie einer Paarungsanforderungsnachricht an einen Server, wobei mit der Paarungsanforderungsnachricht eine Anfrage an den Server erfolgt, eine Paarung des mobilen Endgeräts mit einem landwirtschaftlichen Steuerungs- und Überwachungssystem zuzulassen, das den Bilddaten zugehörig ist;
Empfangen (21), durch den Server, der Bilddaten sowie der Paarungsanforderungsnachricht von dem mobilen Endgerät; und
Vergleichen (22), durch den Server, der empfangenen Bilddaten mit gespeicherten Bilddaten zum Überprüfen, ob der Server so angeordnet ist, dass er Dienste für ein landwirtschaftliches Steuerungs- und Überwachungssystem bereitstellt, das den empfangenen Bilddaten zugehörig ist; und wenn festgestellt wird, dass die empfangenen Bilddaten gespeicherten Bilddaten entsprechen, Genehmigen (23) der Anforderung zum Paaren des mobilen Endgeräts mit dem landwirtschaftlichen Steuerungs- und Überwachungssystem durch den Server.

10. Verfahren nach einem der vorhergehenden Ansprüche, wobei die optisch lesbare Darstellung von Daten einen Strichcode umfasst.

11. Verfahren nach Anspruch 10, wobei der Strichcode ein zweidimensionaler Strichcode ist.

12. Verfahren nach Anspruch 11, wobei der zweidimensionale Strichcode ein QR-Code, Quick Response Code, ist.

13. Landwirtschaftliche Vorrichtung, die einem Steuerungs- und Überwachungssystem (100) zugehörig ist, wobei die landwirtschaftliche Vorrichtung so platziert ist, dass sie eine optisch lesbare Darstellung von Daten innerhalb oder in einer landwirtschaftlichen Anlage anzeigt, die nur berechtigten Nutzern Zugriff gewährt, wobei die landwirtschaftliche Anlage von dem landwirtschaftlichen Steuerungs- und Überwachungssystem gesteuert und überwacht wird, wobei die landwirtschaftliche Vorrichtung Folgendes umfasst:
Mittel (111) zum Senden einer Anforderungsnachricht an einen Server, wobei mit der Anforderungsnachricht eine Anfrage an den Server erfolgt, Bilddaten an die landwirtschaftliche Vorrichtung zu senden, damit die landwirtschaftliche Vorrichtung, auf einer Benutzerschnittstelle davon, eine optisch lesbare Darstellung von Daten anzeigen kann;
Mittel (111) zum Empfangen der Bilddaten von dem Server;
Mittel (112, 113) zum Erstellen einer optisch lesbaren Darstellung von Daten auf der Grundlage der empfangenen Bilddaten; und
Mittel (114) zum Anzeigen der erstellten optisch lesbaren Darstellung von Daten auf der Benutzerschnittstelle der landwirtschaftlichen Vorrichtung.

14. System (1), umfassend:
- ein landwirtschaftliches Steuerungs- und Überwachungssystem (100) sowie eine optisch lesbare Darstellung von Daten, die dem Steuerungs- und Überwachungssystem (100) zugehörig sind, wobei die optisch lesbare Darstellung von Daten innerhalb oder in einer landwirtschaftlichen Anlage platziert ist, die nur berechtigten Nutzern Zugriff gewährt, wobei die landwirtschaftliche Anlage von dem landwirtschaftlichen Steuerungs- und Überwachungssystem gesteuert und überwacht wird;
- ein mobiles Endgerät (200), umfassend: Mittel zum Lesen der optisch lesbaren Darstellung von Daten; Mittel zum Erstellen von Bilddaten auf der Grundlage der gelesenen Darstellung von Daten; und Mittel zum Übertragen der Bilddaten sowie einer Paarungsanforderungsnachricht an einen Server, wobei mit der Paarungsanforderungsnachricht eine Anfrage an den Server erfolgt, eine Paarung des mobilen Endgeräts mit einem landwirtschaftlichen Steuerungs- und Überwachungssystem zuzulassen, das den Bilddaten zugehörig ist; und
- einen Server (300), umfassend: Mittel zum Empfangen von Bilddaten sowie einer Paarungsanforderungsnachricht von einem mobilen Endgerät, wobei mit der Paarungsanforderungsnachricht eine Anfrage an den Server erfolgt, eine Paarung des mobilen Endgeräts mit einem landwirtschaftlichen Steuerungs- und Überwachungssystem zuzulassen, das den Bilddaten zugehörig ist; Mittel zum Vergleichen der empfangenen Bilddaten mit gespeicherten Bilddaten zum Überprüfen, ob der Server so angeordnet ist, dass er Dienste für ein landwirtschaftliches Steuerungs- und Überwachungssystem bereitstellt, das den empfangenen Bilddaten zugehörig ist; und Mittel zum Genehmigen der Anforderung zum Paaren des mobilen Endgeräts mit dem landwirtschaftlichen Steuerungs- und Überwachungssystem.

## Revendications

1. Méthode permettant l'appariement d'un terminal mobile avec un système de gestion et de surveillance d'une ferme associé à une ferme, la méthode étant exécutée dans le terminal mobile et comprenant :
la lecture (11) d'une représentation de données lisible de manière optique, placée dans ou à l'intérieur d'une installation agricole, qui permet l'accès uniquement aux utilisateurs autorisés, laquelle installation agricole est gérée et surveillée au moyen du système de gestion et de surveillance de ferme ;
la formation (12) de données d'image sur la base de la représentation de données lue ; et
la transmission (13) des données d'image ainsi que d'un message de requête d'appariement à un serveur, le message de requête d'appariement demandant au serveur de permettre l'appariement du terminal mobile avec le système de gestion et de surveillance de ferme associé aux données d'image.

2. Méthode selon la revendication 1, dans laquelle l'étape de lecture (11) de la représentation de données lisible de manière optique comprend :
la lecture (11) de la représentation lisible de manière optique de données d'un dispositif agricole associé à la ferme.

3. Méthode selon la revendication 1 ou 2, comprenant en outre :
la réception (14) d'un message d'acquittement, ACK, du serveur, lorsqu'il a été déterminé par le serveur que le serveur permet l'appariement du terminal mobile avec le système de gestion et de surveillance de ferme, après lequel message ACK, des données en rapport avec le système de gestion et de surveillance de ferme sont accessibles au terminal mobile.

4. Méthode selon la revendication 3, comprenant en outre :
la réception (15) de données en rapport avec le système de gestion et de surveillance de ferme.

5. Méthode permettant l'appariement d'un terminal mobile avec un système de gestion et de surveillance d'une ferme associé à une ferme, la méthode étant exécutée dans un serveur et comprenant :
la transmission (20) de données d'image à un dispositif agricole associé au système de gestion et de surveillance de ferme pour permettre au dispositif agricole d'afficher, sur une interface utilisateur de celui-ci, une représentation de données lisible de manière optique, le dispositif agricole étant placé pour afficher une représentation de données lisible de manière optique dans ou à l'intérieur d'une installation agricole, qui permet l'accès uniquement aux utilisateurs autorisés, laquelle installation agricole est gérée et surveillée au moyen du système de gestion et de surveillance de ferme ;
la réception (21) de données d'image ainsi que d'un message de requête d'appariement d'un terminal mobile, le message de requête d'appariement demandant au serveur de permettre l'appariement du terminal mobile avec un système de gestion et de surveillance d'une ferme associé aux données d'image ;
la comparaison (22) des données d'image reçues avec des données d'image enregistrées afin de vérifier si le serveur est agencé pour offrir ses services à un système de gestion et de surveillance de ferme associé aux données d'image reçues ; et
quand il est déterminé que les données d'image reçues correspondent à des données d'image enregistrées, l'approbation (23) de la requête d'appariement du terminal mobile avec le système de gestion et de surveillance de ferme.

6. Méthode selon la revendication 5, comprenant en outre :
la transmission (24) d'un message d'acquittement au terminal mobile ; et
la transmission (25) de données en rapport avec le système de gestion et de surveillance de ferme au terminal mobile, afin de les rendre accessibles au terminal mobile.

7. Méthode selon la revendication 5, comprenant en outre :
quand il est déterminé que les données d'image reçues ne correspondent pas à des données d'image enregistrées, le renvoi (28) d'un message de requête au terminal mobile demandant au terminal mobile de réémettre les données d'image.

8. Méthode d'assistance à l'appariement d'un terminal mobile avec un système de gestion et de surveillance d'une ferme associé à une ferme, la méthode étant exécutée dans un dispositif agricole associé au système de gestion et de surveillance de ferme, lequel dispositif agricole est placé pour afficher une représentation de données lisible de manière optique dans ou à l'intérieur d'une installation agricole, qui permet l'accès uniquement aux utilisateurs autorisés, laquelle installation agricole est gérée et surveillée au moyen du système de gestion et de surveillance de ferme, la méthode comprenant :
l'envoi (31) d'un message de requête à un serveur, le message de requête demandant au serveur d'envoyer des données d'image au dispositif agricole afin de permettre au dispositif agricole d'afficher, sur une interface utilisateur de celui-ci, une représentation de données lisible de manière optique ;
la réception (32) des données d'image du serveur ;
la formation (33) d'une représentation de données lisible de manière optique sur la base des données d'image reçues ; et
l'affichage (34) de la représentation de données lisible de manière optique formée, sur l'interface utilisateur du dispositif agricole.

9. Méthode permettant l'appariement d'un terminal mobile avec un système de gestion et de surveillance d'une ferme associé à une ferme, comprenant :
la lecture (11) par un terminal mobile d'une représentation de données lisible de manière optique placée dans ou à l'intérieur d'une installation agricole, qui permet l'accès uniquement aux utilisateurs autorisés, laquelle installation agricole est gérée et surveillée au moyen du système de gestion et de surveillance de ferme ;
la formation (12) par le terminal mobile de données d'image sur la base de la représentation de données lue ;
la transmission (12) par le terminal mobile des données d'image ainsi que d'un message de requête d'appariement à un serveur, le message de requête d'appariement demandant au serveur de permettre l'appariement du terminal mobile avec le système de gestion et de surveillance de ferme associé aux données d'image ;
la réception (21) par le serveur des données d'image ainsi que du message de requête d'appariement du terminal mobile ; et
la comparaison (22) par le serveur des données d'image reçues avec des données d'image enregistrées afin de vérifier si le serveur est agencé pour offrir ses services à un système de gestion et de surveillance d'une ferme associé aux données d'image reçues ; et quand il est déterminé que les données d'image reçues correspondent à des données d'image enregistrées, l'approbation (23) par le serveur de la requête d'appariement du terminal mobile avec le système de gestion et de surveillance d'une ferme.

10. Méthode selon l'une quelconque des revendications précédentes, dans laquelle la représentation de données lisible de manière optique comprend un code-barres.

11. Méthode selon la revendication 10, dans laquelle le code-barres est un code-barres matriciel.

12. Méthode selon la revendication 11, dans laquelle le code-barres matriciel est un code QR, Quick Response.

13. Dispositif agricole associé à un système de gestion et de surveillance d'une ferme (100), lequel dispositif agricole est placé pour afficher une représentation de données lisible de manière optique dans ou à l'intérieur d'une installation agricole, qui permet l'accès uniquement aux utilisateurs autorisés, laquelle installation agricole est gérée et surveillée au moyen du système de gestion et de surveillance de ferme, le dispositif agricole comprenant :
des moyens (111) destinés à envoyer un message de requête à un serveur, le message de requête demandant au serveur d'envoyer des données d'image au dispositif agricole afin de permettre au dispositif agricole d'afficher, sur une interface utilisateur de celui-ci, une représentation de données lisible de manière optique ;
des moyens (111) destinés à recevoir les données d'image du serveur ;
des moyens (112, 113) destinés à former une représentation de données lisible de manière optique sur la base des données d'image reçues ; et
des moyens (114) destinés à afficher la représentation de données lisible de manière optique formée sur l'interface utilisateur du dispositif agricole.

14. Système (1), comprenant :
- un système de gestion et de surveillance d'une ferme (100) et une représentation lisible de manière optique de données associées au système de gestion et de surveillance de ferme (100), laquelle représentation de données lisible de manière optique est placée dans ou à l'intérieur d'une installation agricole, qui permet l'accès uniquement aux utilisateurs autorisés, laquelle installation agricole est gérée et surveillée au moyen du système de gestion et de surveillance de ferme ;
- un terminal mobile (200), comprenant : des moyens destinés à lire la représentation de données lisible de manière optique ; des moyens destinés à former des données d'image sur la base de la représentation de données lue ; et des moyens destinés à transmettre les données d'image ainsi qu'un message de requête d'appariement à un serveur, le message de requête d'appariement demandant au serveur de permettre l'appariement du terminal mobile avec un système de gestion et de surveillance d'une ferme associé aux données d'image ; et
- un serveur (300), comprenant : des moyens destinés à recevoir des données d'image ainsi qu'un message de requête d'appariement d'un terminal mobile, le message de requête d'appariement demandant au serveur de permettre l'appariement du terminal mobile avec un système de gestion et de surveillance d'une ferme associé aux données d'image ; des moyens destinés à comparer les données d'image reçues avec des données d'image enregistrées afin de vérifier si le serveur est agencé pour offrir ses services à un système de gestion et de surveillance d'une ferme associé aux données d'image reçues ; et des moyens destinés à approuver la requête d'appariement du terminal mobile avec le système de gestion et de surveillance de ferme.
